# EUROPEAN PATENT APPLICATION

(11) **EP 2 226 714 A1**
(43) Date of publication of application: **08.09.2010**
(21) Application number: 09154447.8
(22) Date of filing: 05.03.2009
(51) Int. Cl.: G06F 3/048

(54) **Method for navigating and selecting items with a return-to-center navigation component**

(71) Applicant: RESEARCH IN MOTION LIMITED, Waterloo, Ontario N2L 3W8 (CA)
(72) Inventor: Moosavi, Vahid, Waterloo Ontario N2L 3W8 (CA); Orr, Kevin, Waterloo Ontario N2L 3W8 (CA); Fyke, Steven Henry, Waterloo Ontario N2L 3W8 (CA)
(74) Representative: MERH-IP Matias Erny Reichl Hoffmann

(57) **Abstract**

A user interface for a portable electronic device and associated method, wherein the device includes a display for displaying a plurality of selectable items circumscribing a center portion and a multi-directional user input device, such as a joystick, having a return-to-center mechanism for biasing the device toward a center position. The method comprises displaying the plurality of selectable items, shifting display focus to any one of the selectable items responsive to lateral movement of the user input device away from the center position toward the selectable item, and moving the selectable item to the center portion while maintaining focus responsive to the user input device returning to its center position.

## Description

The instant disclosure is generally directed toward portable electronic devices, and more particularly, to navigation among menu and icon items displayed on a screen of such device.

Electronic devices, such as desktop computers or portable electronic devices (e.g. cellular telephones, smart telephones, wireless PDAs, and laptop computers with wireless 802.11 or Bluetooth capabilities) incorporate various navigation components for user navigation and selection of screen icons to launch applications, make menu selection, etc. For example, track wheels and trackballs are commonly used in mobile communication devices while touch pads and miniature joystick devices are commonly used in laptop computers (e.g. TouchStyk™ input device manufactured by Synaptics Incorporated, Point-It!™ mini joystick manufactured by Unique Perspectives Ltd, and the Nanopoint™ miniature joystick manufactured by Varatouch Technology Inc.)

Users of such devices have been known to experience difficulty in navigating to and then selecting items, such as application icons, with navigation components that have a return-to-center mechanism after release (e.g. many of the aforenoted miniature joystick devices). In use, a user pushes the device in a lateral direction in order to move navigation focus to a desired screen item (e.g. icon), and then selects the item that is in focus (e.g. by clicking a select button, such as a dome key on a joystick). However, occasionally focus will move away from the desired item before the user has had an opportunity to select the item, as a result of the navigation component being biased to a center position. This can result in selection of an incorrect screen item.

Also, for devices that are configured with an auto-launch feature for automatically launching applications when focus moves to an associated application icon, users who are not familiar with the feature may become confused by the unexpected launch of the application.

### General

According to an aspect of this specification, there may be provided an electronic device comprising a display for displaying a plurality of selectable items in respective default positions circumscribing a center portion; a multi-directional user input device having a return-to-center mechanism for biasing said device toward a center position; and a processor for shifting display focus to any one of said selectable items responsive to lateral movement of said user input device away from said center position toward said one of said selectable items, and moving said one of said selectable items to said center portion while maintaining said focus responsive to said user input device returning to said center position.

According to another aspect, there may be provided a method of operating an electronic device having a display for displaying a plurality of selectable items circumscribing a center portion and a multi-directional user input device having a return-to-center mechanism for biasing said device toward a center position, comprising: displaying a plurality of selectable items circumscribing a center portion; shifting display focus to any one of said selectable items responsive to lateral movement of said user input device away from said center position toward said one of said selectable items; and moving said one of said selectable items to said center portion while maintaining said focus responsive to said user input device returning to said center position.

### Brief Description of the Drawings

FIG. 1 is a simplified block diagram of a wireless communication system;

FIG. 2 is a block diagram of components of a portable electronic device;

FIG. 3 is a perspective view of a navigation component of the portable communication device in FIG. 2, having a return-to-center mechanism;

FIGS. 4A - 4D are screen shot representations of a graphical user interface of the portable electronic device in FIG. 2 showing exemplary home screen configurations having icons representing different focus points; and

FIG. 5 is a flowchart showing an exemplary method of navigating between different focus points displayed on the electronic device of FIG. 2 for the exemplary home screen configurations of screen shot representations of FIGS. 4A - 4D, according to an embodiment.

### Description of Preferred Embodiments

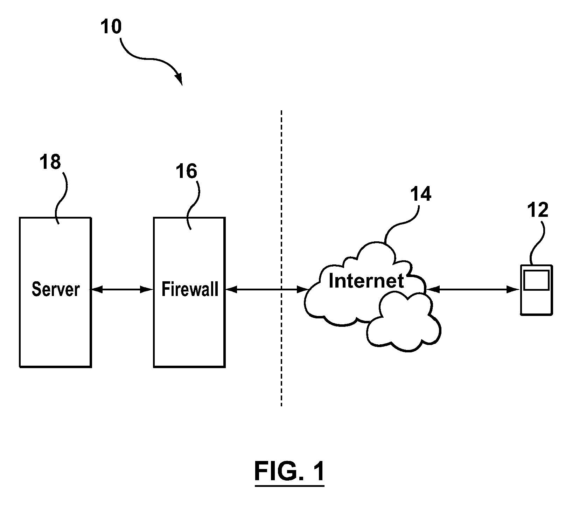

FIG. 1 is a simplified block diagram of an exemplary communication system 10 for a portable electronic device 12. According to the illustrated embodiment, the portable electronic device 12 is operable to effect communications over a radio communications channel and communicates with a base station (not shown) while located within a coverage area that is defined by the base station. However, the portable electronic device 12 is not limited to a device capable of effecting communications. Indeed, the exemplary method of navigating and selecting screen items set forth in greater detail below, may advantageously be implemented within a multitude of devices, some of which are capable of communications and others of which are not (e.g. PDAs, mobile phones, smart telephones, laptop computers, electronic games, GPS receivers, etc.).

In the illustrated embodiment, the base station is part of a wireless network that is in communication with the Internet 14. Data is delivered to the portable electronic device 12 via wireless transmission from the base station. Similarly, data is sent from the portable electronic device 12 via wireless transmission to the base station.

It will be appreciated that the portable electronic device 12 of FIG. 1 is movable within a coverage area of the base station and can be moved to coverage areas defined by other base stations. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A server 18 handles wireless client requests from the portable electronic device 12. A firewall 16 is provided between the server 18 and the Internet 14. The server 18 further operates as a Mail Server, which communicates with an email client of the portable electronic device 12 to allow a user to send and receive email messages.

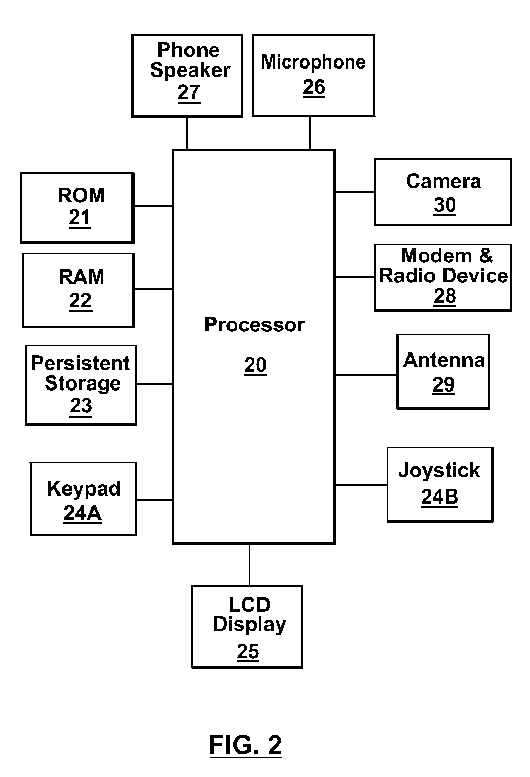

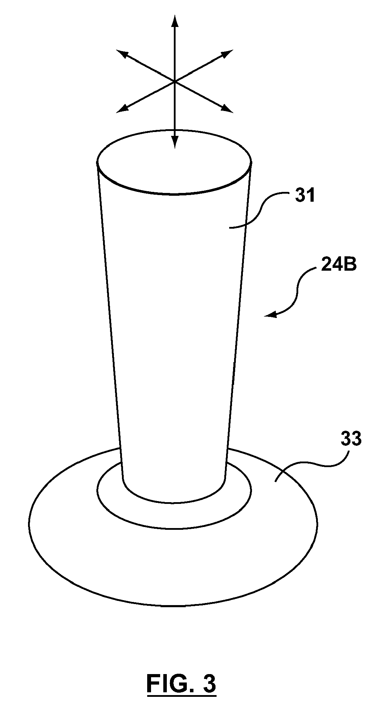

FIG. 2 is a block diagram showing certain components within an exemplary embodiment of the portable electronic device 12. The portable electronic device 12 includes a processor 20 connected to a read-only-memory (ROM) 21 that contains a plurality of applications executable by the processor 20 for enabling each portable electronic device 12 to perform certain functions including, for example, Personal Identification Number (PIN) message functions, Short Message Service (SMS) message functions, address book and calendaring functions, camera functions, and cellular telephone functions. More particularly, processor 20 may execute applications within ROM 21 for notifying the user of events such as incoming calls and/or emails, appointments, tasks, etc. The processor 20 is also connected to a random access memory unit (RAM) 22 and a persistent storage device 23 to facilitate various non-volatile storage functions of the portable electronic device 12. The processor 20 receives input from one or more input devices, including a keypad 24A and a multi-directional device having a return-to-center mechanism, such as a joystick 24B, shown in greater detail with reference to FIG. 3. Other multi-directional devices are contemplated, such as touch pads, +-shaped four-directional switch such as found on video game consoles, etc. that incorporate return-to-center mechanisms.

The processor 20 outputs to one or more output devices, including a Liquid Crystal Display (LCD) display 25. A microphone 26 and phone speaker 27 are connected to the processor 20 for cellular telephone functions. The processor 20 is also connected to a modem and radio device 28. The modem and radio device 28 is used to connect to wireless networks and transmit and receive voice and data communications through an antenna 29. A camera 30 provides functionality for taking pictures that can be viewed on display 25, sent to other users via wireless email, saved to persistent storage 23 for later viewing, etc.

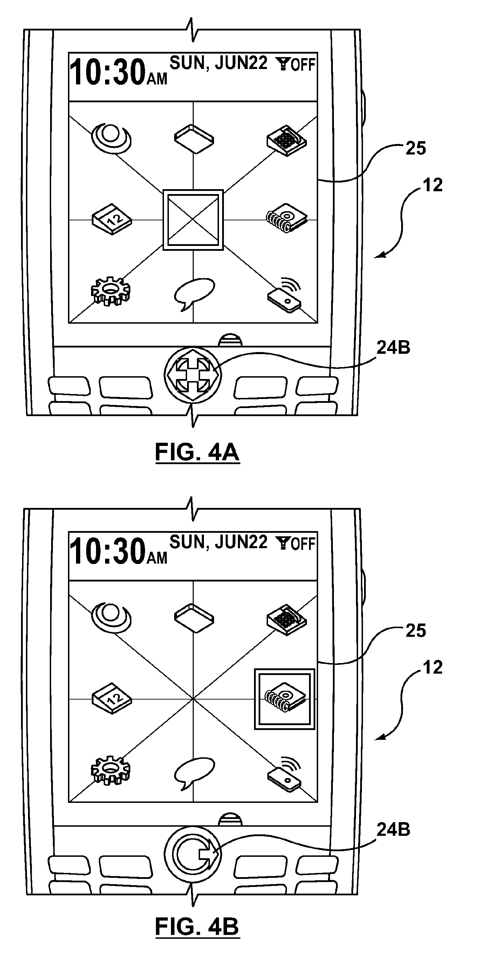

The joystick 24B is arranged to fit between the existing keys of keypad 24A, as shown in FIGS. 4A - 4D. The joystick includes a rigid shaft portion 31 which is configured to move in any lateral direction within a 360° range of motion, as well a axially, as shown by the arrows in FIG. 3. At least one spring mechanism is provided (not shown) for biasing the shaft portion 31 to a center position such that when the shaft portion is moved in a lateral or axial direction away from its neutral position, the shaft portion 'springs back' to the neutral position. A portion of the shaft 31 extends below the surface of a base 33, so as to engage a sensor assembly (not shown), in a well known manner. Movement of the shaft portion 31 in a lateral motion causes a cursor on display 25 to move, or otherwise cause focus to move between various screen items, as discussed in greater detail below with reference to FIGS. 4A - 4F. Pressing on the shaft portion 31 such that it moves axially inward relative to the device 12, causes a screen item that is in focus to be selected (e.g. for launching an application).

In the context of this specification and the exemplary embodiment illustrated in the drawings, "user interface" comprises a multi-directional device having a return-to-center mechanism (such as joystick 24B, etc.) and at least one graphical window displayed via an output device (such as display 25).

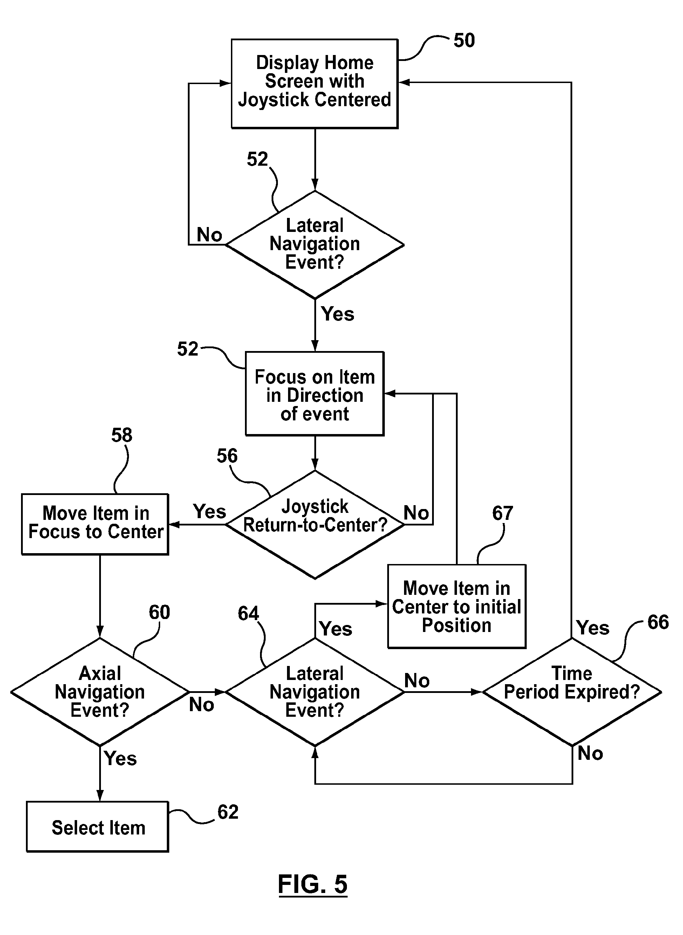

FIGS. 4A - 4D depict several screen shots or representations of an exemplary home screen displayed on display 25 of the portable electronic device 12, with item navigation and selection occurring in accordance with steps depicted in the flowchart of FIG. 5, according to an exemplary embodiment.

Turning to FIG. 4A, an exemplary home screen is shown with eight application icons circumscribing a 'blank' center portion of the home screen: an Internet icon (top-left), a Memo Pad icon (top-center), a Phone icon (top-right), an Address Book icon (right), a WiFi icon (bottom-right), a Talk icon (bottom-center), a Settings icon (bottom-left) and a Calendar icon (left). Navigation paths between the icons are illustrated using double-sided arrows superimposed on the joystick 24B. These navigation arrows are illustrated for the purpose of explaining the exemplary method but would not, normally, be seen on the portable electronic device 12 during ordinary usage.

Thus, FIG. 4A represents a home screen when the joystick 24B is biased to its center position (step 50). Laterally moving the joystick 24B from the center default position in any direction (up, down, left, right, up & right, up & left, down & right and down & left) will result in focus moving to the application icon positioned in that direction (i.e. Memo Pad, Talk, Calendar, Address Book, Phone, Internet, WiFi and Settings, respectively).

Therefore, as shown in FIG. 4B, moving the joystick 24B to the right causes focus to shift from the center of the screen to the Address Book icon (steps 52, 54).

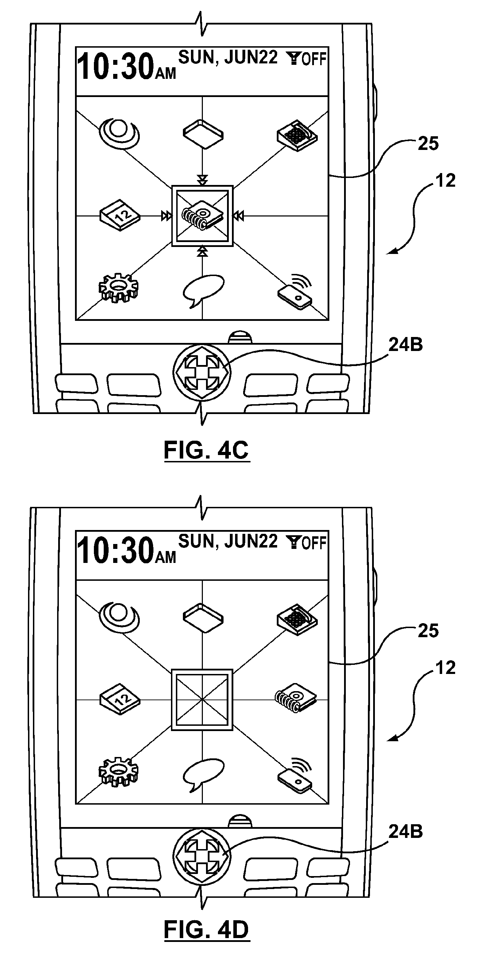

Releasing the joystick 24B (step 56) causes it to automatically return to its center (neutral) position as a result of the return-to-center mechanism (e.g. spring). According to an aspect of this disclosure, return of the joystick 24B to center causes any item (e.g. icon) that is in focus to remain in focus and be moved to the center of the display 25 (step 58), as shown in FIG. 4C.

If the joystick is then moved axially inwards (step 60), the center icon is thereby selected (step 62) causing an associated application (e.g. Address Book) to be launched, or other appropriate action to occur (e.g. menu item selection, etc.)

However, if no selection action is taken within a predetermined period of time, for example 2 - 3 seconds (step 66), the center icon automatically loses focus and moves back to its original position (i.e. the display reverts to the home screen configuration, step 50), as shown in FIG 4D.

Or, in the event the joystick is moved laterally for navigation to another one of the peripheral icons (step 64), the center icon moves back to its original position (step 67) and focus moves to the other one of the peripheral icons (step 54).

According to the described embodiment, since item selection is permitted to occur after the navigation components (joystick 24B) has returned to its center (neutral) position, the user no longer has to coordinate axial movement of the navigation component (or other button actuation) to select the item with continued pressure on the navigation component against the return-to-center biasing mechanism.

According to an alternative embodiment, for devices that are configured with an auto-launch feature, rather than automatically returning the center icon to its original position after a period of inaction (e.g. 2 - 3 seconds) the associated application may be caused to auto-launch (i.e. the "Yes" decision in step 66 results in auto-launching of the application associated with the item). In that case, automatic launching of the application can be defeated by laterally moving the joystick for navigation to another one of the peripheral icons within the predetermined time period (step 64). In such an embodiment, the user will be aware that the icon has been selected and will have ample opportunity to defeat the automatic launching of the associated application.

A person of ordinary skill in the art will understand that the user interfaces set forth above are exemplary and non-limiting. Other appearances and styles can be displayed.

The above embodiments are for illustration, and although one or more particular embodiments of the device and method have been described herein, changes and modifications may be made thereto without departing from the disclosure in its broadest aspects and as set forth in the following claims.

## Claims

1. An electronic device (12) comprising:
a display (25) for displaying a plurality of selectable items in respective default positions circumscribing a center portion;
a multi-directional user input device (24B) having a return-to-center mechanism for biasing said device toward a center position; and
a processor (20) for shifting display focus to any one of said selectable items responsive to lateral movement of said user input device away from said center position toward said one of said selectable items, and moving said one of said selectable items to said center portion while maintaining said focus responsive to said user input device returning to said center position.

2. The portable electronic device of claim 1, wherein said multi-directional user input device is a joystick.

3. The portable electronic device of claim 1, wherein said multi-directional user input device is a touch pad.

4. The portable electronic device of claim 1, wherein said multi-directional user input device is a cross-shaped four-directional switch.

5. The portable electronic device of claim 2, wherein said joystick comprises a shaft portion (31) configured to move in a lateral direction and in an axial direction , at least one spring mechanism for biasing the shaft portion to said center position such that when the shaft portion is moved in either a lateral or axial direction away from the center position, the shaft portion is biased toward the center position, and a portion of the shaft extending below a surface of a base (33) thereof so as to engage a sensor assembly.

6. A method of operating an electronic device (12) having a display (25) for displaying a plurality of selectable items circumscribing a center portion and a multi-directional user input device (24B) having a return-to-center mechanism for biasing said device toward a center position, the method comprising:
displaying (50) a plurality of selectable items circumscribing a center portion;
shifting display focus (54) to any one of said selectable items responsive to lateral movement of said user input device away from said center position toward said one of said selectable items; and;
moving (58) said one of said selectable items to said center portion while maintaining said focus responsive to said user input device returning to said center position.

7. The method as claimed in claim 6, further comprising selecting (62) said item responsive to axial movement of said user input device.

8. The method as claimed in claim 6, further comprising moving (67) said one of said selectable items from said center portion to an initial position thereof and removing focus therefrom responsive to further lateral movement of said user input device away from said center position toward another one of said selectable items within a predetermined time period.

9. The method as claimed in claim 6, further comprising moving said one of said selectable items from said center portion to an initial position thereof and removing focus therefrom in the absence of any further movement of said user input device within a predetermined time period (66).

10. The method as claimed in claim 6, further comprising selecting said item in the absence of any further movement of said user input device within a predetermined time period.

11. The method as claimed in claim 6, wherein said selectable items are icons for launching applications on said portable electronic device.

12. The method as claimed in claim 11, wherein said icons include at least two of an Internet icon, a Memo Pad icon, a Phone icon, an Address Book icon, a WiFi icon, a Talk icon, a Settings icon and a Calendar icon.

13. The method as claimed in claim 11, wherein said icons are arranged in a square circumscribing said center portion.

14. The method as claimed in claim 13, wherein said square comprises three icons per side.

15. A computer program product comprising a computer-readable medium storing computer-readable instructions that when executed, cause an electronic computing device to perform the method according to any one of claims 6 to 14.
